Europäisches Patentamt

European Patent Office

Office européen des brevets

(19)

(11) Veröffentlichungsnummer: **0 037 109**
**B1**

# (12) EUROPÄISCHE PATENTSCHRIFT

(45) Veröffentlichungstag der Patentschrift:
**12.06.85**

(21) Anmeldenummer: **81102356.3**

(22) Anmeldetag: **28.03.81**

(51) Int. Cl.⁴: **A 01 M 29/02**

(54) **Einrichtung zur Vertreibung von Vögeln und Klein-Nagetieren.**

(30) Priorität: **29.03.80 DE 3012290**

(43) Veröffentlichungstag der Anmeldung:
**07.10.81 Patentblatt 81/40**

(45) Bekanntmachung des Hinweises auf die Patenterteilung:
**12.06.85 Patentblatt 85/24**

(84) Benannte Vertragsstaaten:
**AT BE CH DE FR GB IT LI LU NL SE**

(56) Entgegenhaltungen:
**CH - A - 440 821**
**CH - A - 595 750**
**DE - A - 2 022 056**
**DE - A - 2 911 764**
**FR - A - 2 338 647**
**US - A - 3 872 472**

(73) Patentinhaber: **Hirs, Joseph A., Chilerain 5,**
**CH-8634 Hombrechtikon (CH)**

(72) Erfinder: **Hirs, Joseph A., Chilerain 5,**
**CH-8634 Hombrechtikon (CH)**

(74) Vertreter: **Rottmann, Maximilian R., Hug Interlizenz AG**
**Alte Zürcherstrasse 49, CH-8903 Birmensdorf/ZH (CH)**

## Beschreibung

Die Erfindung bezieht sich auf eine Einrichtung zur Vertreibung von Vögeln, insbesondere solchen von Taubengrösse einerseits und von Sperlings- bis Amselgrösse andererseits, sowie von Klein-Nagetieren wie Mäusen und Ratten, durch Beaufschlagung mindestens eines Raumbereiches mit wenigstens einer ersten Schallschwingung im Utraschallbereich oder im ultraschallnahen Bereich, nach dem Oberbegriff des Patentanspruchs 1.

Die Verwendung von Ultraschallwellen zum Vertreiben oder Verscheuchen von Ratten und Mäusen wie auch anderen Tieren ist bekannt aus der CH-A 440 821, wo ein globaler Frequenzbereich von 15 bis 100 kHz als wirksam angegeben ist. Der Teilbereich von 15 bis 20 kHz zählt dabei allerdings nicht zum Ultraschall gemäss üblicher Definition. Abgesehen von den praktischen Schwierigkeiten, die einer Abstrahlung mit genügend hohen Leistungsdichten und einer ausreichenden Tiefenwirkung im Raum wegen der Dämpfungen entgegenstehen, hat sich der Frequenzbereich oberhalb etwa 45 kHz für die Vertreibung von Klein-Nagetieren und von Vögeln der Grösse von Spatzen bis zu derjenigen von Tauben als kaum wirksam erwiesen.

In der genannten Schrift ist ferner 20 kHz als wirksame Frequenz für die Vertreibung von Ratten und eine solche von 21 kHz als wirksam für Feldmäuse angegeben. Tatsächlich haben sich diese Frequenzen als nicht ausreichend wirksam erwiesen. Bekanntermassen muss daher bei diesen Frequenzen zu einer planmässigen Frequenzänderung oder Wobbelung gegriffen werden, um die Wirksamkeit zu verbessern, insbesondere die Langzeitwirksamkeit. Die Unzulänglichkeit der letzteren wird Gewöhnungs- oder Taubheitseffekten zugeschrieben.

Ferner ist aus der FR-A 2 338 647 ein Verfahren und eine Einrichtung zum Vertreiben von Klein-Nagetieren und Insekten bekannt, wobei frequenzmodulierte Ultraschallschwingungen verwendet werden. Die Modulationsfrequenz der Ultraschallschwingungen liegt hier sehr niedrig, nämlich im Bereich zwischen 1 und 5 Hz. Für den Frequenzbereich der Ultraschallschwingungen sind hier Eckwerte von 16 und 40 kHz angegeben, womit physiologische Wirkungen an den zu vertreibenden Tieren hervorgerufen werden sollen.

Abgesehen von der fehlenden Wirksamkeit gegenüber Vögeln, vor allem gegen solche in Taubengrösse und darunter, bleibt die niederfrequente Komponente in dem angegebenen Frequenzbereich im wesentlichen wirkungslos, weil einerseits die Wellenlängen hierbei um viele Grössenordnungen oberhalb der Abmessungen von etwa resonanzempfindlichen Körperorganen der zu verscheuchenden Tiere sind, während andererseits diese niederfrequente Modulation, und zwar eine reine Frequenzmodulation, zur Vermeidung von Gewöhnungs- und Unempfindlichkeitsdefekten nicht ausreicht.

Ferner ist es aus der CA-A 917 468 bekannt, zum Vertreiben von Tieren, insbesondere von Vögeln in Starengrösse bis zu Amselgrösse amplitudenmodulierte Schallschwingungen mit einem Träger im Bereich zwischen 500 und 5000 Hz bei einer Modulationsfrequenz zwischen 100 und 150 Hz zu verwenden. Solche Verfahren sind grundsätzlich nur in grosser Entfernung von menschlichen Aufenthaltsgebieten anwendbar, weil der Träger im bevorzugten Empfindlichkeitsbereich des menschlichen Gehörs liegt und die zum Vertreiben von Tieren erforderlichen Schallintensitäten für den Menschen zu einer erträglichen Belästigung führen. Darüberhinaus bereitet die Erzeugung einer äumlichen Schall-Leistungsdichte, wie sie für Vertreibungseffekte erforderlich ist, bei derart langwelligen Schwingungen grundsätzliche Schwierigkeiten und erfordert mindestens den Einsatz von aufwendigen Schallabstrahlern. Insbesondere ist auch eine starke Bündelung der Schallabstrahlung in diesen Wellenlängenbereichen schwierig bzw. aufwendig.

Eine Vorrichtung zum Verscheuchen von Vögeln ist aus der CH-PS 595 750 bekannt. Diese weist wenigstens zwei Ultraschall-Resonatoren auf, deren voneinander verschiedene Resonanzfrequenzen im Frequenzbereich ab etwa 15 kHz liegen. Allerdings ist diese Vorrichtung aus den zuvor erwähnten Gründen, trotz verhältnismässig hohen Bauaufwandes, nur innerhalb eines begrenzten Anwendungsbereiches für die Vertreibung von Tieren der eingangs genannten Art verwendbar.

Die in der DE-A1 2 911 764 beschriebene Vorrichtung zur Schädlingsbekämpfung schliesslich mag wohl einfach im Aufbau sein, besitzt jedoch nur einen örtlich sehr eng begrenzten Wirkungsbereich, wobei zudem eine ausreichende Wirksamkeit auf Schädlinge unterschiedlicher Art kaum gegeben sein dürfte. Aufgabe der Erfindung ist demgegenüber die Schaffung einer Einrichtung zur Kleintiervertreibung mit Schallschwingungen im Ultraschallbereich oder im ultraschallnahen Bereich, die sich ohne erhöhten Leistungs- und Einrichtungsaufwand durch verbesserte Wirksamkeit bei der Vertreibung von Vögeln und Klein-Nagetieren auszeichnet. Die erfindungsgemässe Lösung dieser Aufgabe kennzeichnet sich durch die im Anspruch 1 angegebenen Merkmale.

Für die Vertreibung von Vögeln ist einerseits eine in bestimmten, vergleichsweise niederfrequenten Resonanzbereichen konzentrierte Empfindlichkeit des Federkleides bzw. der Verankerung des Federkleides im Tierkörper sowie andererseits eine ausreichend hohe räumliche Schall-Leistungsdichte massgeblich. Eingehende experimentelle und theoretische Untersuchungen haben zu den in der Beschreibung angegebenen, spezifizierten Niederfrequenzbereichen für die angegebenen Vogelarten geführt, wobei es im wesentlichen auf die Tiergrösse und damit auf die Abmessungen der vorliegenden Elemente des Federkleides ankommt. Die Anwendung einer solchen niederfrequenten Modulation auf Trägerschwingungen im Ultraschallbereich oder wenigstens im ultraschallnahen Bereich ermöglicht dabei die erforderliche, hohe Leistungsdichte mit vergleichsweise geringem apparativem Aufwand.

Eine wesentliche Verbesserung ist in diesem Zusammenhang durch die Anwendung einer Amplitudenmodulation der Ultraschallschwingungen mit einer niederfrequenten Modulationsschwingung gegeben. Bestimmte experimentelle Untersuchungen haben nämlich gezeigt, dass es für die Wirkung der modulierten Schallschwingungen auf die Empfindlichkeit des Federkleides bzw. seiner Aufhängung gegenüber der durch Demodulation wieder in Erscheinung tretenden Niederfrequenzkomponente ankommt. Bei einem Aufbau und Hauptabmessungen der Federkleidelemente, wie sie bei Vögeln der angegebenen Art vorhanden sind, tritt nach diesen Untersuchungen infolge der einseitig gerichteten Beweglichkeit der Federkleidelemente, die durch die Funktion beim Flugvorgang bedingt ist, ein Ventil- oder Gleichrichtungseffekt hinsichtlich der Schalldruckschwingungen auf. Diese Gleichrichtung bedeutet unmittelbar eine Amplituden-Demodulation, so dass die niederfrequente Modulationsschwingung besonders intensiv wirksam wird.

Andererseits ist für einen intensiven Vertreibungseffekt auch eine spezielle Anpassung der Trägerfrequenz an die jeweils zu beeinflussende Tierart von Bedeutung. Diese selektive Einstellung der Trägerfrequenz ergibt vor allem in Verbindung mit vorstehend erläuterter Niederfrequenzmodulation optimale Effekte, ist jedoch grundsätzlich auch für die an sich bekannte Beaufschlagung von Raumbezirken zwecks Vertreibung von unterschiedlichen Vögeln und anderen Kleintieren mit andersartiger oder auch ohne niederfrequente Modulation von Bedeutung.

Die danach geltende untere Schwelle von 21 kHz ist für die genannten Klein-Nagetiere – im Gegensatz zu der erwähnten Schrift insbesondere auch für Ratten – wie auch für Vögel durch umfangreiche Messungen und Beobachtungen erhärtet worden. Vor allem hat sich gezeigt, dass oberhalb einer vergleichsweise markanten Frequenzgruppe von 21,5 kHz eine mit der Frequenz überproportional ansteigende Wirksamkeit einsetzt, insbesondere für Ratten, und zwar bemerkenswerterweise ohne wesentliche Beeinträchtigung durch Gewöhnung d.h. mit guter Langzeitwirkung. Gleiches wurde auch für Vögel in der erwähnten Grösse festgestellt, insbesondere für Tauben.

Andererseits haben die verfeinerten Frequenzuntersuchungen erwiesen, dass eine stark erhöhte Wirksamkeit nicht nur an die Überschreitung von unteren Grenzwerten, sondern auch an die Einhaltung oberer Grenzwerte der Beschallungsfrequenz gebunden ist, obwohl im allgemeinen innerhalb des Frequenzbereiches von 21.5 bis etwa 45 kHz mit einer für manche Anwendungsfälle ausreichenden Wirksamkeit gerechnet werden kann. Im Hinblick auf die erstrebte Minimisierung des Aufwandes hinsichtlich Leistung und Apparaten sowie hinsichtlich des Raumbedarfes für die Beschallungseinrichtung, der für Anwendungen in geschlossenen Räumen, z.B. Betrieben der Gastronomie und der Lebensmittelbranche, von grosser Bedeutung ist, hat sich das Frequenzband zwischen 21.5 und und 25 kHz für die Vertreibung von Ratten als optimal erwiesen. Für Mäuse gilt ein breiterer und bei höheren Frequenzen liegender Optimalbereich, nämlich zwischen 25 und 40 kHz, wobei wiederum in einem engeren Bereich zwischen etwa 35 und 40 kHz eine noch intensivere Wirkung beobachtet wurde.

Auch für die Vertreibung von Vögeln in der erwähnte Grösse haben sich neben der bereits genannten unteren Grenzfrequenz gewisse Frequenzbänder als bevorzugt wirksam erwiesen. So gilt für Tauben ein bevorzugter Wirkungsbereich zwischen 21,5 und etwa 26 kHz, innerhalb dessen ein engerer Optimalbereich von geringer Breite liegt, nämlich zwischen etwa 22 und 23 kHz.

Für die an hochwertigen Kulturen der Landwirtschaft wichtige Vertreibung von Kleinvögeln wie Spatzen u.a. wurde im Gesamtfrequenzbereich zwischen 21,5 und etwa 45 kHz zwar durchweg eine gewisse Wirksamkeit festgestellt, jedoch haben genauere Messungen und Beobachtungen bemerkenswerterweise zwei verschieden gelagerte, in der Wirkung im wesentlichen gleichwertige Bereiche ergeben, nämlich einmal zwischen 21,5 und etwa 23 kHz und zum anderen zwischen etwa 31 und 32 kHz. Diese Bereiche können gegebenenfalls kombiniert angewendet werden, jedoch ist erfahrungsgemäss einer derselben im allgemeinen ausreichend.

Allgemein ist zu erwähnen, dass die Beschallung in den angegebenen Frequenzbereichen gegebenenfalls in Kombination mit einer längerfristigen Variation oder periodischen Tastung angewendet werden kann.

Die erfindungsgemässen Beschallungseinrichtungen, zeichnen sich durch geringen Raumbedarf bei einfachem, robustem Aufbau aus.

Die Anordnung des abstrahlenden Resonators gemäss Anspruch 1 im Kreuzungsbereich der Drehachsen ermöglicht eine besonders kompakte Konstruktion mit Unterbringung des im allgemeinen flächen- oder scheibenhaften Resonators im mittleren Bereich der Einrichtung. Gleichwohl führt die Drehbewegung um beide Achsen zu einer weitgehend gleichmässigen Raumbeschallung in einem grossen Winkelbereich.

Weiterbildungen der erfindungsgemässen Einrichtung, die ebenfalls der Lösung der übergeordneten Erfindungsaufgabe dienen, nämlich der Aufwandsverminderung und insbesondere der Verminderung des Bauaufwandes, kennzeichnen sich durch die Merkmale der abhängigen Ansprüche 2–9. Der danach vorgesehene Antrieb ezüglich einer Drehachse mittels eines infolge der Drehbewegung um die andere Achse an einer Gegenfläche abrollenden Wälzorgans erlaubt die Einsparung mehr oder weniger komplizierter Koppelgetriebe bei einfacher Abstimmbarkeit der Drehgeschwindigkeit bezüglich beider Achsen aufeinander.

Weiterhin kann zum Erfindungsgegenstand eine Abstimmung der Drehgeschwindigkeit des abstrahlenden Elementes bezüglich beider Drehachsen gehören, wie sie im Anspruch 9 gekennzeichnet ist. Auch diese Lösung beruht auf dem genannten Prinzip; die damit erzielbare, gleichmässige oder überlappende Raumerfassung durch die Ultraschallbeaufschlagung ist mit besonderem Vorteil in Kombination mit den Merkmalen der anderen Ansprüche anwendbar.

Die Erfindung wird weiter anhand des in den Zeichnungen dargestellten Ausführungsbeispiels erläutert.

Hierin zeigt:

Fig. 1 eine Ansicht einer erfindungsgemässen Beschallungseinrichtung mit zwei zueinander quer angeordneten Drehachsen, mit Blickrichtung quer zu der durch diese beiden Drehachsen gegebenen Ebene,

Fig. 2 das Prinzipschaltbild einer erfindungsgemässen Beschallungseinrichtung für Betrieb mit frequenz- und amplitudenmoduliertem Ultraschallträger,

Fig. 3 ein Zeitdiagramm des Modulationssignals sm aus der Schaltung nach Fig. 2,

Fig. 4 ein Zeitdiagramm der veränderlichen Augenblicksfrequenz der niederfrequenzmodulierten Ultraschallschwingung aus der Schaltung nach Fig. 2,

Fig. 5 ein Zeitdiagramm der frequenz- und amplitudenmodulierten Ultraschallschwingung S aus der Schaltung nach Fig. 2 und

Fig. 6 ein Zeitdiagramm in zusammengedrängtem Zeitmassstab für eine aus niederfrequenzmodulierten Ultraschallschwingungsgruppen sowie Pausen bestehenden Schwingungsfolge entsprechend einer endgültigen Schallschwingungsfolge für die Beaufschlagung von Raumbezirken.

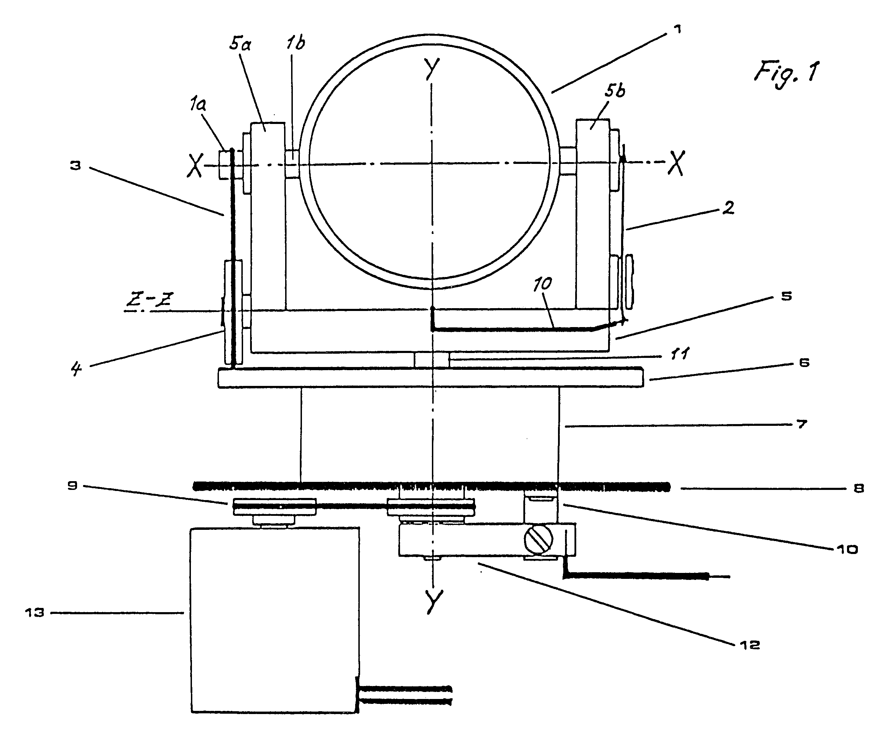

Nach Fig. 1 ist der abstrahlende Ultraschallresonator 1 zwischen den Schenkeln 5a und 5b eines gabelartigen Trägers 5 um eine quer zu den Gabelschenkeln angeordnete erste Achse X–X sowie mit dem Träger 5 insgesamt um eine zweite, rechtwinklig zur ersten angeordneten Achse Y–Y drehbar gelagert. Die im einzelnen nicht dargestellte Lagerung der Drehachse Y—Y ist innerhalb eines Sockels 7 des Gehäuses untergebracht, von dem der Übersichtlichkeit halber nur das deckelförmige Oberteil 8 angedeutet ist. Für den Drehantrieb bezüglich der Achse Y–Y ist ein Motor 13 mit Riementrieb 9 als Kupplung zum unteren Ende der Trag- und Antriebswelle 11 des gabelförmigen Trägers 5 vorgesehen. Für die Drehachse X–X, die parallel zur Ebene des scheibenförmigen Resonators 1 und durch die Endabschnitte der Gabelschenkel des Trägers 5 verlaufend angeordnet ist und eine besonders platzsparende und sichere Lagerung des Resonators ermöglicht, wird der Drehantrieb durch ein Wälzorgan in Form eines Reibrades 4 bewirkt, das umfangsseitig an einer gestellfesten Gegenfläche 6 — gebildet durch einen plattenförmigen Aufsatz des Sockels 7 – abrollt und daher eine Drehgeschwindigkeit annimmt, die durch diejenige der Welle 11 und das Verhältnis der Wälzradien am Umfang des Reibrades 4 einerseits und an der Gegenfläche 6 bestimmt ist und entsprechend bequem eingestellt werden kann.

Die Drehachse Z–Z des Reibrades 4 ist parallel zur Drehachse X–X des Resonators 1 sowie im wesentlichen in einer Ebene mit dieser und der Drehachse Y–Y in der Gabelebene des Trägers 4 angeordnet, wodurch sich eine insgesamt flache, kompakte Ausbildung der gesamten Lagerungs- und Antriebseinrichtung ergibt. Die mittige Anordnung der Drehachse Y–Y in der Gabel führt ausserdem zu einer leicht auswuchtbaren, im wesentlichen achssymmetrischen Anordnung der rotierenden Massen.

Die erwähnte Drehachsenanordnung des Reibrades 4 ermöglicht ferner eine vorteilhaft einfache Kupplung zwischen diesem und einem Antriebselement 1a der Drehachse X–X – hier ein als Stirnscheibe ausgebildeter Endabschnitt der Welle 1b des Resonators 1 – mittels eines Riementriebes 3. Gegebenenfalls kann an dieser Stelle ein Reib- oder Verzahnungs-Stirnradantrieb im Interesse einer vergleichsweise starren Kupplung eingesetzt werden.

Im Beispielsfall ist das Reibrad 4 über einen aus elastischem Material bestehenden Treibriemen mit dem Antriebsorgan 1a des Resonators 1 gekuppelt. Dieser relativ verformungsweiche Riemen läuft über den Umfang des Reibrades 4 und tritt mit der Gegenfläche 6 in Abwälzberührung. Auf diese Weise ergibt sich eine einfache und sichere Antriebskraftübertragung von der Drehachse Y–Y zur Drehachse X–X.

Die Zuführung der elektrischen Schwingungsenergie zum Resonator 1 erfolgt von einer nicht dargestellten, üblichen Quelle über einen Schleifkontakt 12 zur isolierten Welle 11 und über eine Leitung 10 sowie einen weiteren Schleifkontakt 2 über die Welle 1b zum Resonatoranschluss.

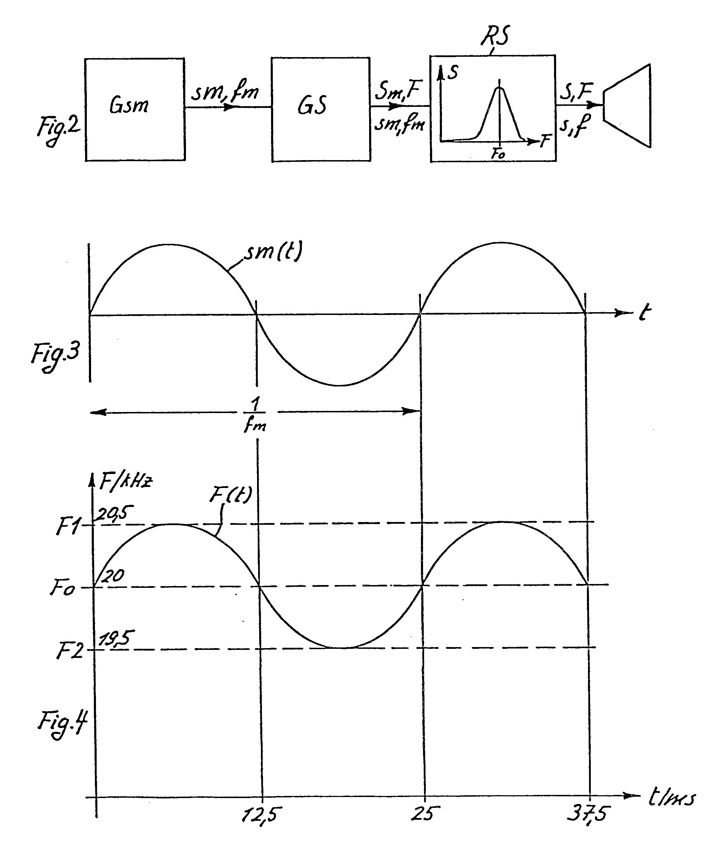

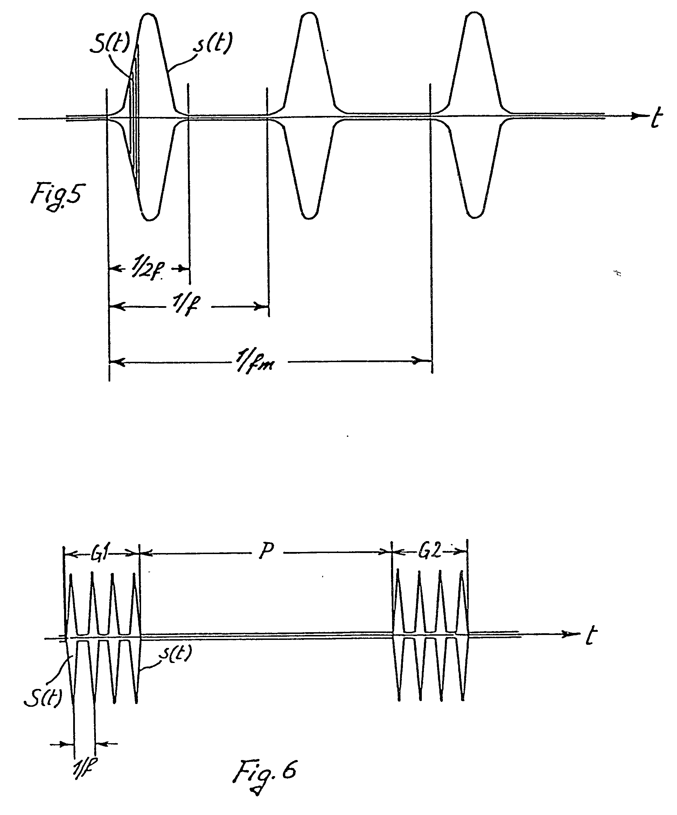

Fig. 2 zeigt den grundsätzlichen Aufbau einer Schaltung zur Schwingungserzeugung mit einem Träger im Ultraschallbereich oder im ultraschallnahen Bereich sowie mit niederfrequenter Frequenz- und Amplitudenmodulation. Hierzu ist im Beispielsfall ein niederfrequenter Modulationsgenerator Gsm zur Erzeugung eines Modulationssignals sm mit der Frequenz fm vorgesehen. Der Zeitverlauf dieses Modulationssignals ist in Fig. 3 über der Zeit t angedeutet. Das Modulationssignal sm steuert die Frequenz eines nachgeordneten Ultraschallgenerators GS, dessen Ausgangssignal Sm mit der infolge der Modulation zeitveränderlichen Augenblicksfrequenz F den Träger bzw. die erste Schallschwingung darstellt. In Fig. 4 ist der entsprechend sm sinusförmige Zeitverlauf der Augenblicksfrequenz F des Signals Sm dargestellt, und zwar mit der Mittelfrequenz Fo = 20 kHz und den beiderseitigen Frequenzgrenzen F1 = 20,5 kHz sowie F2 = 19,5 kHz. Der Frequenzhub der Modulation beträgt also im dargestellten Beispielsfall 0,5 kHz. Für die Frequenz fm des Modulationssignals sm ist ein Wert von 40 Hz zugrundegelegt.

Die Schwingungsgeneratoren Gsm und GS bilden zusammen demgemäss eine Schwingschaltung, die den bis dahin nur frequenzmodulierten Träger Sm liefert. Die Niederfrequenzkomponente dieser Schwingung liegt mit 40 Hz unter dem für Vögel von mindestens Taubengrösse als wirksam erkannten Bereich von 60 bis 100 Hz. Durch Nachordnung eines Resonanzgliedes RS mit einer ausgeprägten Resonanz im Bereich des Frequenzhubes, und zwar mit etwa symmetrischer Anordnung innerhalb des Frequenz-Veränderungsbereiches, also bei 20 kHz, ergibt sich ein frequenz- und amplitudenmoduliertes Signal S mit einer der Amplitudenmodulation entsprechenden, impulsartigen Hüllkurve s gemäss Fig. 5. Diese niederfrequente zweite Schwingung, welche in der Amplitudenmodulation enthalten ist, hat eine Grund- oder Impulsfolgefrequenz F = 80 Hz, also innerhalb des angegebenen, wirksamen Niederfrequenzbereiches für die zweite Schallschwingung.

Der angegebene Schaltungsaufbau und die Aufeinanderfolge von Frequenz- und Amplitudenmodulation mit Hilfe eines Resonanzgliedes zeichnet sich durch vorteilhafte apparative Einfachheit und hohe Betriebssicherheit aus. Es versteht sich jedoch, dass auch unmittelbar eine Amplitudenmodulation mit der gewünschten Niederfrequenzkomponente mit an sich üblichen Schaltungsmitteln erreicht werden kann. Ebenso versteht es sich, dass anstelle der sinusförmigen Frequenzmodulation, die anschliessend durch das Resonanzglied mit einer Amplitudenmodulation von doppelter Frequenz überlagert wird, eine Frequenzmodulation mit einem geeigneten, nichtsinusförmigen Modulationssignal vorgenommen werden kann, wobei die Modulationsfrequenz der Frequenzmodulation und Amplitudenmodulation übereinstimmt oder in einem anderen Verhältnis als 1:2 steht. Insbesondere kann gegebenenfalls mit guter Wirksamkeit nur eine Amplitudenmodulation mit der niederfrequenten Komponente vorgenommen werden. Die dargestellte, impulsförmige Amplitudenmodulation hat sich jedoch als hervorragend wirksam erwiesen.

Dabei hat sich im Einzelnen herausgestellt, dass die Grundfrequenz f der zweiten Schaltschwingung s zum Vertreiben von Vögeln in Ringeltaubengrösse vorteilhaft in den Bereich zwischen 60 und 100 Hz, für das Vertreiben von Vögeln in dieser und einer darüberliegenden Grösse jedoch vorzugsweise in den Bereich zwischen 70 und 90 Hz gelegt wird.

Andererseits konnte ermittelt werden, dass zum Vertreiben von Vögeln geringerer Grösse, und zwar in der Grösse von Sperlingen bis Amseln, die Grundfrequenz der zweiten Schallschwingung mit grösster Wirkung in den Bereich zwischen 100 und 180 Hz, für die Vertreibung von Vögeln in Starengrösse jedoch bevorzugt in den Bereich zwischen 120 und 160 Hz gelegt wird.

Die als Beispiel dargestellte Schaltung ermöglicht in diesem Zusammenhang die Anordnung einer frequenzmodulierten Niederfrequenzkomponente in einen unteren Wirk-Frequenzbereich sowie die gleichzeitige Anordnung einer amplitudenmodulierten Niederfrequenzkomponente in den höheren Niederfrequenzbereich, und zwar mit einem Verhältnis der beiden Niederfrequenzen von etwa 1:2.

Als besonders wirksam hat sich ferner eine impulsartige Hüllkurve der amplitudenmodulierten Schallschwingungen gemäss Fig. 6 erwiesen. Hierbei sind die einzelnen Impuls-Hüllkurven wie in der Darstellung nach Fig. 5 im Bereich einer

$$\text{halben Grundschwingungsdauer} = \frac{1}{2 \cdot f}$$

konzentriert, während die gesamte Signalfolge aus impulsförmig, niederfrequent modulierten Schallschwingungsgruppen G1, G2 ... und dazwischen liegenden Pausen P zusammengesetzt ist. Während die impulsförmige Konzentration der niederfrequent modulierten Schallschwingungen bereits eine erhöhte Wirksamkeit der Beschallung zur Folge hat, vermeiden die eingeschalteten Pausen einen unerwünschten Gewöhnungseffekt der zu vertreibenden Tiere. Dazu ist im allgemeinen ein vergleichsweise niedriges Verhältnis der Zeiterstreckung der Schallschwingungsgruppen und der Pausen erforderlich. Vorzugsweise wird dieses Zeitverhältnis in einem Wertebereich zwischen 1:200 und 1:500 gewählt. Der Übersichtlichkeit halber ist in Fig. 6 ein wesentlich grösseres Verhältnis angedeutet. Ein solches vergleichsweise langfristiges Amplitudenmodulationsprogramm mit grossen Pausen lässt sich besonders vorteilhaft mit einem zweiachsigen Rotationssystem der vorstehend beschriebenen Art verwirklichen, wobei sich ausserdem eine aufeinanderfolgende Beschallung verschiedener Raumelemente mit grosser Leistungsdichte ergibt.

**Patentansprüche**

1. Einrichtung zum Vertreiben von Vögeln und Klein-Nagetieren durch Beaufschlagung mindestens eines Raumbereiches mit wenigstens einer ersten Schallschwingung im Utraschallbereich oder im ultraschallnahen Bereich, wobei die erste Schallschwingung mit mindestens einer zweiten, im Vergleich zu der ersten niederfrequenten Schallschwingung moduliert ist, welche Einrichtung einen Resonator zur Abstrahlung der Schallschwingung im Ultraschallbereich bzw. im ultraschallnahen Bereich umfasst, dadurch gekennzeichnet, dass der Resonator (1) um zwei zueinander im Winkel angeordnete Achsen (X–X, Y–Y) drehbar gelagert und drehangetrieben sowie zumindest annähernd im Kreuzungsbereich der beiden Drehachsen angeordnet ist.

2. Einrichtung nach Anspruch 1, dadurch gekennzeichnet, dass der Resonator (1) zwischen den Schenkeln eines gabelartigen Trägers (5) um eine quer zu den Gabelschenkeln verlaufende erste Achse (X–X) drehbar gelagert ist.

3. Einrichtung nach Anspruch 2, dadurch gekennzeichnet, dass der Resonator scheibenförmige, vorzugsweise kreisscheibenförmige Gestalt besitzt und um eine im wesentlichen parallel zur Scheibenebene und durch die Endabschnitte der Gabelschenkel des Trägers (5) verlaufende erste Achse (X–X) drehbar gelagert ist.

4. Einrichtung nach Anspruch 2 oder 3, dadurch gekennzeichnet, dass die zweite Drehachse (Y–Y) im wesentlichen in der Gabelebene des Trägers (5) sowie wenigstens annähernd mittig zwischen den Gabelschenkeln und parallel zu diesen verläuft.

5. Einrichtung nach einem der Ansprüche 2 bis 4, dadurch gekennzeichnet, dass der Träger (5) um die zweite Achse (Y–Y) drehbar gelagert und mit einem Drehantrieb bezüglich dieser Achse verbunden ist, und dass als Drehantrieb für die erste Achse (X–X) ein am Träger (5) drehbar gelagertes und bei dessen Drehbewegung um die zweite Achse (Y–Y) an einer Gegenfläche (6) abrollendes Wälzorgan (4) vorgesehen ist.

6. Einrichtung nach Anspruch 5, dadurch gekennzeichnet, dass die Drehachse (Z–Z) des Wälzorganes (4) im wesentlichen parallel zu der ersten Drehachse (X–X) angeordnet und durch einen Riemen- oder Stirnradantrieb (3) mit einem Antriebselement (1a) für eine in der ersten Achse (X–X) verlaufende Welle zur Lagerung des Resonators (1) gekoppelt ist.

7. Einrichtung nach Anspruch 5 oder 6, dadurch gekennzeichnet, dass die Gegenfläche (6) rechtwinklig zur zweiten Drehachse (Y–Y) angeordnet und das Wälzorgan für den Resonatorantrieb als auf dieser Fläche mit seinem Umfang abrollendes Reibrad (4) ausgebildet ist.

8. Einrichtung nach Ansprüchen 6 und 7, dadurch gekennzeichnet, dass das Reibrad (4) mittels eines aus elastischem Material bestehenden Treibriemens (3) mit dem Antriebsorgan (1a) des Resonators (1) gekoppelt ist, und dass der über den Umfang des Reibrades (4) laufende Treibriemen (3) als sich auf der Gegenfläche (6) abwälzendes Haftreibungsglied des Reibrades (4) dient.

9. Einrichtung nach einem der vorangehenden Ansprüche, dadurch gekennzeichnet, dass das Verhältnis der Drehgeschwindigkeiten des Resonators (1) bezüglich der beiden Achsen (X–X, Y–Y) zueinander auf die Winkelbreite der keulenartigen Abstrahlungs-Charakteristik des Resonators (1) derart abgestimmt ist, dass der zu beschallenden Raum möglichst lückenlos von der Ultraschallabstrahlung bestrichen wird.

**Claims**

1. Device for driving away birds and small rodents by applying at least one first sound vibration in the ultrasonic range or in the near-ultrasonic range to at least one spatial area, the first sound vibration being modulated with at least one second sound vibration which is of low frequency compared with the first sound vibration, which device comprises a resonator for radiating the sound vibration in the ultrasonic range or in the near-ultrasonic range, characterised in that the resonator (1) is supported to be rotatable about two axes (X–X, Y–Y) arranged at an angle to each other and is rotationally driven and arranged at least approximately in the area of the intersection of the two axes of rotation.

2. Device according to Claim 1, characterised in that the resonator (1) is supported between the arms of a forklike carrier (5) to be rotatable about a first axis (X–X) extending transversely to the fork arms.

3. Device according to Claim 2, characterised in that the resonator has a disc-shaped and preferably circulardisc-shaped form and is supported to be rotatable about a first axis (X–X) extending essentially parallel to the plane of the discs and through the end sections of the fork arms of the carrier (5).

4. Device according to Claim 2 or 3, characterised in that the second axis of rotation (Y–Y) extends essentially in the plane of the fork of the carrier (5) and at least approximately in the centre between the fork arms and parallel to these arms.

5. Device according to one of Claims 2 to 4, characterised in that the carrier (5) is supported to be rotatable about the second axis (Y–Y) and is connected to a rotational drive with respect to this axis and that a rolling member (4) supported to be rotatable at the carrier (5) and moving in rolling contact with a counter surface (6) with a rotational movement by the carrier about the second axis (Y–Y) is provided as rotational drive for the first axis (X–X).

6. Device according to Claim 5, characterised in that the axis of rotation (Z–Z) of the rolling member (4) is arranged essentially parallel to the first axis of rotation (X–X) and is coupled by a belt or spur wheel drive (3) to a drive element (1a) for a shaft, extending along the first axis (X–X), for supporting the resonator (1).

7. Device according to Claim 5 or 6, characterised in that the counter surface (6) is arranged at right angles to the second axis of rotation (Y–Y) and that the rolling member for the resonator drive is constructed as a friction wheel (4) which moves with its periphery in rolling contact with this surface.

8. Device according to Claims 6 and 7, characterised in that the friction wheel (4) is coupled by means of a drive belt (3), consisting of elastic material to the drive member (1a) of the resonator (1) and that the drive belt (3), running over the periphery of the friction wheel (4), serves as the static-friction member of the friction wheel (4) moving in rolling contact on the counter surface (6).

9. Device according to one of the preceding Claims, characterised in that the ratio of the rates of rotation of the resonator (1) relative to the two axes (X–X, Y–Y) with respect to each other is matched to the angular width of the loop-type radiation characteristic of the resonator (1) in such a manner that the space to be irradiated with sound is covered as completely as possible by the ultrasonic radiation.

## Revendications

1. Dispositif destiné à chasser les oiseaux et les petits rongeurs en soumettant au moins une zone spatiale à au moins une première vibration sonore dans le domaine des ultrasons ou dans un domaine proche des ultrasons, cette première vibration sonore étant modulée par au moins une deuxième vibration sonore à plus basse fréquence que la première, le dispositif comportant un résonateur destiné à faire rayonner la vibration sonore dans le domaine des ultrasons ou dans le domaine proche des ultrasons, caractérisé par le fait que le résonateur (1) est monté de manière à pouvoir tourner autour de deux axes (X–X, Y–Y) formant un angle l'un par rapport à l'autre, est entraîné en rotation et disposé au moins approximativement dans la zone où les deux axes de rotation se croisent.

2. Dispositif selon la revendication 1, caractérisé par le fait que le résonateur (1) est monté entre les branches d'un support (5) en forme de fourche, de manière à pouvoir tourner autour d'un premier axe (X–X) s'étendant transversalement par rapport aux branches de la fourche.

3. Dispositif selon la revendication 2, caractérisé par le fait que le résonateur a une configuration en forme de plateau, de préférence en forme de disque, et est monté de manière à pouvoir tourner autour d'un premier axe (X–X) s'étendant sensiblement parallèlement au plan dudit plateau et traversant les sections d'extrémité des branches de fourche du support (5).

4. Dispositif selon l'une des revendications 2 ou 3, caractérisé par le fait que le deuxième axe de rotation (Y–Y) s'étend sensiblement dans le plan de la fourche du support (5) ainsi qu'au moins approximativement au centre des branches de la fourche et parallèlement à ces dernières.

5. Dispositif selon l'une des revendications 2 à 4, caractérisé par le fait que le support (5) est monté de manière à pouvoir tourner autour du deuxième axe (Y–Y) et est relié à un mécanisme d'entraînement en rotation par rapport à cet axe, et qu'il est prévue, comme mécanisme d'entraînement en rotation autour du premier axe (X–X) un organe de roulement (4) monté à rotation sur le support (5) et roulant sur une contre-surface (6) lors du mouvement de rotation dudit support (5) autour du deuxième axe (Y–Y).

6. Dispositif selon la revendication 5, caractérisé par le fait que l'axe de rotation (Z–Z) de l'organe de roulement (4) est disposé sensiblement parallèlement au premier axe de rotation (X–X) et est accouplé par un entraînement à courroie ou à pignon droit (3) à un élément d'entraînement (1a) d'un arbre s'étendant selon le premier axe (X–X) et servant au montage du résonateur (1).

7. Dispositif selon la revendication 5 ou 6, caractérisé par le fait que la contre-surface (6) est disposée à angle droit par rapport au deuxième axe de rotation (Y–Y) et que l'organe de roulement pour l'entraînement du résonateur a la conformation d'un galet de frottement qui roule par sa périphérie, sur ladite surface.

8. Dispositif selon les revendications 6 et 7, caractérisé par le fait que le galet de frottement (4) est accouplé au moyen d'une courroie d'entraînement (3) en matière élastique à l'organe d'entraînement (1a) du résonateur (1), et que la courroie d'entraînement (3) passant autour du galet de frottement (4) sert d'élément de frottement statique du galet de frottement (4) roulant sur la contre-surface (6).

9. Dispositif selon l'une des revendications précédentes, caractérisé par le fait que le rapport entre les vitesses de rotation respectives du résonateur (1) autour des deux axes (X–X, Y–Y) est adapté à l'amplitude angulaire de la caractéristique de rayonnement en forme de lobe du résonateur, de telle manière que l'espace à soumettre aux vibrations sonores soit couvert par le rayonnement ultrasonore de façon aussi complète que possible.

Fig. 1

Fig.2

Fig.3

Fig.4

Fig.5

$\frac{1}{2f}$

$\frac{1}{f}$

$\frac{1}{f_m}$

Fig. 6